# EUROPEAN PATENT SPECIFICATION

(11) **EP 3 719 053 B1**
(45) Date of publication and mention of the grant of the patent: **26.04.2023**
(21) Application number: 18882412.2
(22) Date of filing: 29.10.2018
(51) Int. Cl.: C08G 69/18, C08K 5/3412, C08K 3/12, C08K 3/22, C08K 5/057, C08L 77/02, C08J 5/00

(54) **METHOD FOR PREPARING POLYAMIDE BY USING MOLECULAR WEIGHT CONTROL AGENT HAVING DOUBLE ACTIVE GROUP, AND POLYAMIDE PREPARED THEREBY**
VERFAHREN ZUR HERSTELLUNG VON POLYAMID DURCH VERWENDUNG EINES MOLEKULARGEWICHTSREGLERS MIT DOPPELTER AKTIVER GRUPPE UND DAMIT HERGESTELLTES POLYAMID
PROCÉDÉ DE PRÉPARATION DE POLYAMIDE EN UTILISANT UN AGENT DE RÉGULATION DU POIDS MOLÉCULAIRE AYANT UN DOUBLE GROUPE ACTIF, ET POLYAMIDE PRÉPARÉ PAR CE PROCÉDÉ

(30) Priority: 28.11.2017 KR 20170160752
(43) Date of publication of application: 07.10.2020
(73) Proprietor: Hanwha Solutions Corporation, Jung-gu Seoul 04541 (KR)
(72) Inventor: KIM, Do Kyoung, Busan 46320 (KR); LEE, Jin Seo, Gyeonggi-do 13531 (KR); KWON, Kyung Ho, Daegu 41051 (KR); DO, Seung Hoe, Daejeon 34090 (KR); LEE, Hye Yeon, Seoul 08807 (KR); YIM, Kyoung Won, Gwangju 500-825 (KR); KIM, Dae Hak, Gyeonggi-do 13625 (KR)
(74) Representative: Klunker IP Patentanwälte PartG mbB
(86) International application number: PCT/KR2018/012909
(87) International publication number: WO 2019/107756

(56) References cited:
- CN-A- 102 079 814
- CN-A- 102 079 814
- CN-A- 103 881 085
- CN-A- 103 881 086
- US-A1- 2012 088 899
- US-A1- 2012 088 899
- US-A1- 2016 002 402
- UDIPI K ET AL: "Polyamides from lactams via anionic ring-opening polymerization: 1. Chemistry and some recent findings", POLYMER, ELSEVIER SCIENCE PUBLISHERS B.V, GB, vol. 38, no. 4, 1 January 1997 (1997-01-01), pages 927-938, XP004017146, ISSN: 0032-3861, DOI: 10.1016/S0032-3861(96)00566-6

## Description

### TECHNICAL FIELD

The present invention relates to a method for preparing a polyamide by using a molecular weight controller (molecular weight control agent) having a double active group and a polyamide prepared thereby, and more particularly, to a method for preparing a polyamide by using a molecular weight controller having a double active group in anionic ring-opening copolymerization of a polyamide, thereby enabling molecular weight to be controlled through the addition reaction of the molecular weight controller, and a polyamide prepared thereby.

### BACKGROUND ART

A polyamide resin is a linear polymer bonded by an amide (-NHCO-) bond. The polyamide resin is strong, has excellent physical properties in terms of friction resistance, abrasion resistance, oil resistance, and solvent resistance, and is easily melt-molded. Therefore, the polyamide resin is widely used as clothing materials, fibers for industrial materials, engineering plastics, and the like. Polyamides may be classified into aliphatic polyamides, aromatic polyamides, and aliphatic cyclic polyamides according to molecular structures. The aliphatic polyamides may be collectively referred to as nylon, and the aromatic polyamides may be collectively referred to as aramid.

Polyamides are prepared by various polymerization methods and may be classified into those prepared by ring-opening polymerization of lactam, such as nylon 6, those prepared by polycondensation of diamines and dibasic acids, such as nylon 6,6, nylon 6,10 and nylon 4,6, and those prepared by polycondensation of aminocarboxylic acids, such as nylon 11 and nylon 12. Furthermore, so-called hybrid polymerized nylons, such as hybrid condensates of caprolactam and 6,10-nylon salts (hexamethylenediamine and sebacate), are industrially produced, and various polyamides including functional groups such as side chains and hydroxyl groups, aromatic rings and, hetero rings in molecules have been studied.

Lactams, for example, caprolactam may be anionically polymerized. This method generally uses a catalyst and an initiator (also referred to as an activator) (activated anionic polymerization). Initiators or activators frequently used till now include diisocyanates or derivatives thereof.

US 2012/0088899 A1 discloses a process for producing an activated monomer composition comprising at least one lactam and/or lactone, which is stable with respect to polymerization. Said monomer composition can be used for producing a polyamide molding via ring-opening anionic polymerization.

Udipi K. et al: "Polyamides from lactams via anionic ring-opening polymerization:!. Chemistry and some recent findings", Polymer, Elsevier Science Publishers B.V,GB. Vol 38, No. 4, 1 January 1997, pages 927 to 938 discloses a study of the anionic polymerization of caprolactam employing a bisimide (isophthaloyl-bis-caprolactam) as the initiator and caprolactam-magnesium bromide as the catalyst.

US Patent No. 4,754,000 (Bayer AG) discloses activated anionic polymerization of lactams, which prepares polyamides using biuret-group-containing polyisocyanates derived from non-aromatic diisocyanates as an activator.

EP 1091991 (BASF AG) discloses a composition including polyisocyanurates having more than 3.5 NCO functional groups on average as a component A and a method for preparing a surface coating composition using the composition.

In US Patent No. 3,423,372, uncapped polyisocyanates are used (resulting in a significant reduction in reactivity), and an activator concentration in that example is very low (1/200 mol to 1/50 mol). Therefore, the polymerization time is significantly delayed.

In EP 0156129, a rubber (i.e., elastomer) is used as a precursor of a multifunctional activator. Therefore, the resulting PA is up to 1.12 GPa and is not rigid. The activator has a high weight average molecular weight (Mw). In this case, a large amount of activator is required (20% or more). A mixture of a bifunctional activator and a multifunctional activator is used. Therefore, the resulting polyamide is not a crosslinked material.

In addition, US Patent No. 4,067,861 (1978) discloses a technology for anionic polymerization of lactams through an extruder. A metering pump is installed between an extruder body and an extruder die so as to obtain a constant output and uniform viscosity and physical properties. Although attempting to mechanically solve viscosity non-uniformity, this is not a fundamental solution.

U.S. Patent No. 3,878,173 (1975) points out the problem of unstable viscosity due to thermal decomposition and the formation of a structurally disorderly branching structure. However, in order to prevent decomposition of a synthesized polymer, an attempt to solve the problem is made just by using a more acidic additive. This US patent does not disclose the solution to the non-uniform branching structure. For reference, a branching side reaction that occurs during polyamide anion polymerization is discussed in detail in M. P. Stevens, "Polymer Chemistry", 2nd Ed., Oxford University Press, p 429 (1990) and G. Odian, "Principles of Polymerization", 2nd Ed., John Wiley & Sons, p541 (1981).

In US Patent No. 5,747,634 (1998), a solution liquid system containing a catalyst and an initiator (reaction accelerator) at the same time is introduced so as to obtain a more uniform product. US Patent No. 5,747,634 discloses that the solution liquid system is introduced to obtain uniform products with a constant quality and a high reproducibility result, but there is a problem that is not efficient due to a problem of solvent removal when applying to a reaction extrusion method.

In particular, the conventional method has to depend on a method for inducing high molecular weight through additional side reactions. As in the case of polyamide 12 or polyamide 612, which is polymerized at a high temperature, the reaction is rapidly performed at a high polymerization temperature. Thus, there occurs a phenomenon in which the reaction occurs non-uniformly before a polymer chain is generated by sufficient reaction.

### DESCRIPTION OF EMBODIMENTS

### TECHNICAL PROBLEM

The present invention aims to solve the above-described problems of the related art and the technical problems requested from the past.

An object of the present invention is to provide a method for preparing a polyamide by using a molecular weight controller having a double active group in anionic ring-opening copolymerization of a polyamide, thereby enabling molecular weight to be controlled through the addition reaction of the molecular weight controller, and a polyamide prepared thereby.

### SOLUTION TO PROBLEM

In order to achieve the above objects, the present invention provides a method for preparing a polyamide using a molecular weight controller having a double active group.

The method is a method for preparing a polyamide which includes a molecular weight controller having a double active group by an anionic polymerization reaction, wherein
lactam, and based on 100 parts by weight of the entire lactam, 0.01 parts by weight to 20 parts by weight of an alkali metal as an initiator, 0.01 parts by weight to 5.0 parts by weight of a compound represented by Formula 2 as a molecular weight controller having a double active group, and a compound represented by Formula 1 using 0.01 parts by weight to 5.0 parts by weight of an activator are included: 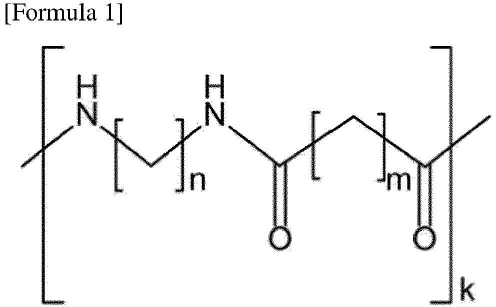 wherein n and m are each independently a rational number satisfying n=m or n>m, and k is a rational number satisfying a condition that a weight average molecular weight (Mw) of the compound represented by Formula 1 is in a range of 20,000 g/mol to 100,000 g/mol,

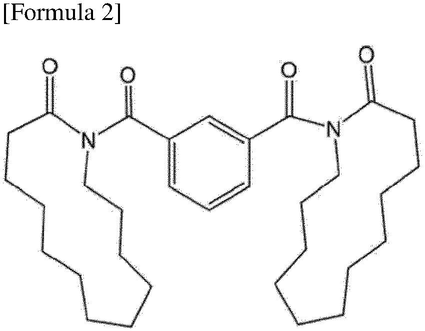

In one preferred embodiment of the present invention, the lactam may include at least one selected from the group consisting of caprolactam, laurolactam, pyrrolidone, piperidinone, and any mixture thereof.

In one preferred embodiment of the present invention, two materials selected as the lactam may be included at a weight ratio of 20 to 80:80 to 20.

In one preferred embodiment of the present invention, the activator may include at least one selected from the group consisting of carbon dioxide (CO₂), benzoyl chloride, N-acetyl caprolactam, N-acetyl laurolactam, octadecyl isocyanate (SIC), toluene diisocyanate (TDI), hexamethylene diisocyanate (HDI), and any mixture thereof.

In one preferred embodiment of the present invention, the activator may be toluene diisocyanate (TDI).

In one preferred embodiment of the present invention, the molecular weight controller may have a melting temperature (Tm) of 160°C to 180°C.

In one preferred embodiment of the present invention, the alkali metal may include at least one selected from the group consisting of metal hydride, metal hydroxide, and metal alkoxide.

In one preferred embodiment of the present invention, the polymerization reaction may be performed in a range of 160°C to 300°C. According to the present invention, the polymerization reaction may be performed in a range of 0.5 minutes to 120 minutes based on an experimental reactor. The polymerization reaction time is not particularly limited and may be appropriately adjusted according to a weight of a compound introduced or a size and a type of the reactor.

The present invention provides a polyamide prepared by the above-described method.

In one preferred embodiment of the present invention, the polyamide may have a polydispersity index (PDI) of 4 or less.

In one preferred embodiment of the present invention, a weight average molecular weight (Mw) of the polyamide may be in a range of 20,000 g/mol to 100,000 g/mol.

In one preferred embodiment of the present invention, the polyamide may have a linear, branched, hyperbranched, or dendritic structure.

In addition, the present invention provides a parts material selected from the group consisting of a vehicle material, an electronic device material, an industrial pipe material, a construction engineering material, a 3D printer material, a textile material, a cladding material, a machine tool material, a medical material, an aviation material, a photovoltaic material, a battery material, a sports material, a household appliance material, a household material, and a cosmetic material, which each include the polyamide.

In a specific example, a product including the parts material may be vehicle air ducts, plastic/rubber compounds, adhesives, lights, polymer optical fibers, fuel filter caps, line systems, cables for electronic devices, reflectors, sheaths of cables, optical fibers, wire protection tubes, control units, pipe tubes, liners, pipe coatings, oilfield exploration hoses, 3D printers, multifilaments, spray hoses, valves, ducts, pulps, gears, medical catheters, flame retardants for aircraft, solar cell protection plates, cosmetic materials, high hardness films, ski boots, headsets, glasses frames, toothbrushes, water bottles, or outsoles, but the present invention is not limited thereto.

### ADVANTAGEOUS EFFECTS OF DISCLOSURE

As described above, since the molecular weight controller having the double active group is used in the anionic ring-opening copolymerization of the polyamide, the polyamide that enables molecular weight to be controlled through the addition reaction of the molecular weight controller can be prepared.

### BRIEF DESCRIPTION OF DRAWING

FIG. 1 is a graph showing the result of ¹³C-NMR analysis of a molecular weight controller prepared according to the present invention.
FIG. 2 is a graph showing the result of DSC analysis of the molecular weight controller prepared according to the present invention.

### BEST MODE

The present invention will be described with reference to specific embodiments and the accompanying drawings. The embodiments will be described in detail in such a manner that the present invention may be carried out by those of ordinary skill in the art.

In addition, unless otherwise specified in the present specification, the term "substitution" or "substituted" means that one or more hydrogen atoms in the functional groups of the present invention are substituted with one or more substituents selected from the group consisting of a halogen atom (-F, -Cl, -Br, or -I), a hydroxy group, a nitro group, a cyano group, an amino group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group. These substituents may be linked to each other to form a ring.

In the present invention, unless otherwise specified, the term "substituted" means that a hydrogen atom is substituted with a substituent such as a halogen atom, a C₁-C₂₀ hydrocarbon group, a C₁-C₂₀ alkoxy group, and a C₆-C₂₀ aryloxy group.

In addition, unless otherwise specified, the term "hydrocarbon group" refers to a linear, branched, or cyclic saturated or unsaturated hydrocarbon group. The alkyl group, the alkenyl group, the alkynyl group, and the like may be linear, branched, or cyclic.

In addition, unless otherwise specified in the present specification, the term "alkyl group" refers to a C₁-C₃₀ alkyl group and the term "aryl group" refers to a C₆-C₃₀ aryl group. In the present specification, the term "heterocyclic group" refers to a group in which one to three heteroatoms selected from the group consisting of O, S, N, P, Si, and any combination thereof are contained in one ring. Examples of the heterocyclic group may include pyridine, thiophene, and pyrazine, but the present invention is not limited thereto.

Hereinafter, embodiments of the present invention will be described with reference to the accompanying drawings, so that those of ordinary skill in the art can easily carry out the present invention.

As described above, since an activator used in a conventional anionic polymerization has only one carbonyl group that opens a cyclic structure in a molecular structure, there is a limitation in obtaining a polyamide having a high molecular weight.

The present invention seeks a solution to the above-described problems by providing a method for preparing a polyamide through anionic copolymerization using a molecular weight controller having a double active group in an anionic polymerization reaction.

Specifically, the present invention provides a method for preparing a polyamide, wherein a molecular weight controller by an anionic polymerization reaction is included.

Lactam, and based on 100 parts by weight of the entire lactam, 0.01 parts by weight to 20 parts by weight of an alkali metal as an initiator, 0.01 parts by weight to 5.0 parts by weight of a compound represented by Formula 2 as a molecular weight controller having a double active group, and a compound represented by Formula 1 using 0.01 parts by weight to 5.0 parts by weight of an activator may be included.

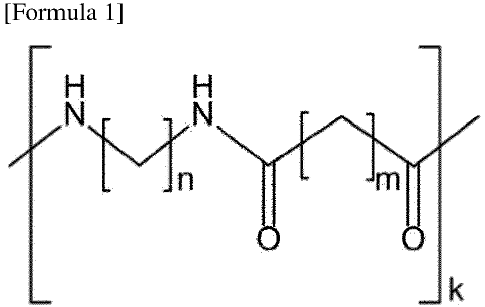

n and m are each independently a rational number satisfying n=m or n>m, and k is a rational number satisfying a condition that a weight average molecular weight (Mw) of the compound represented by Formula 1 is in a range of 20,000 g/mol to 100,000 g/mol.

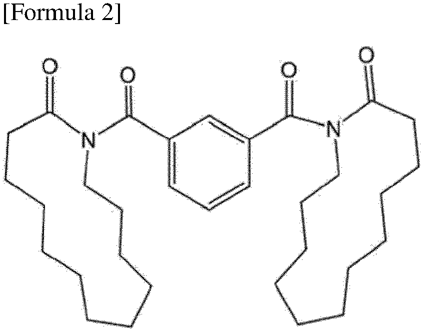

More specifically, compositions included in the preparation of the polyamide, including the amide-based molecular weight controller according to the present invention, will be described below.

First, the lactam according to the present invention is a monomer for preparing a polyamide. Laurolactam may be preferably used as the monomer. However, the present invention is not limited thereto. For example, the lactam having 4 to 12 carbon atoms may include caprolactam, piperidone, pyrrolidone, enantolactam, and caprylactam. In some cases, the lactam may include propiolactam, 2-pyrrolidone, valerolactam, caprolactam, heptanolactam, octanolactam, nonanolactam, decanolactam, undecanolactam, and dodecanolactam.

In addition, the alkali metal catalyst according to the present invention is an initiator for preparing the polyamide and may include at least one selected from the group consisting of metal hydride, metal hydroxide, and metal alkoxide as a compound that allows the formation of the laurolactam anion.

In a specific example, the metal hydride may include sodium hydride and potassium hydride, the metal hydroxide may include sodium hydroxide and potassium hydroxide, and the metal alkoxide may include potassium tert-butoxide and aluminum isopropoxide, but the present invention is not limited thereto.

The metal alkoxide may include sodium caprolactamate or potassium caprolactamate, alkaline earth metal caprolactamate, for example, magnesium bromide caprolactamate, magnesium chloride caprolactamate, or magnesium biscaprolactamate, an alkali metal, for example, sodium or potassium, alkali metal base, for example, sodium base, for example sodium hydride, sodium, sodium hydroxide, sodium methanolate, sodium ethanolate, sodium propanolate, or sodium butanolate, or at least one selected from the group consisting of potassium base, for example potassium hydride, potassium, potassium hydroxide, potassium methanolate, potassium ethanolate, potassium propanolate, potassium butanolate, or any mixture thereof, and preferably at least one selected from the group consisting of sodium caprolactate, potassium caprolactate, magnesium bromide caprolactate, magnesium chloride caprolactate, magnesium biscaprolactate, sodium hydride, sodium, sodium hydroxide, sodium ethanolate, sodium methanolate, sodium propanolate, sodium butanolate, potassium hydride, potassium, potassium hydroxide, potassium methanolate, potassium ethanolate, potassium propanolate, potassium butanolate, and any mixture thereof. In addition, at least one selected from the group consisting of sodium hydride, sodium, sodium caprolactamate, and any mixture thereof may be included.

The metal catalyst may be used in the form of a solid or a solution, and the catalyst is preferably used in the form of a solid. The catalyst is preferably added to a lactam melt in which the catalyst can be dissolved. These catalysts lead to particularly rapid reactions, thereby increasing the efficiency of the process of preparing the polyamide according to the present invention.

According to the present invention, an amount of the alkali metal catalyst may be in a range of 0.01 parts by weight to 20 parts by weight based on 100 parts by weight of the entire lactam. The amount of the alkali metal catalyst may be in a range of preferably 0.1 parts by weight to 10 parts by weight, and more preferably 0.5 parts by weight to 5 parts by weight.

In this case, when the alkali metal catalyst is added in an amount of less than 0.01 parts by weight, unpolymerization may occur or a reaction rate may decrease. When the amount of the alkali metal catalyst exceeds 20 parts by weight, a molecular weight reduction problem may occur. Therefore, the above range is preferable.

Next, preferably, the molecular weight controller according to the present invention has the double active group including a compound represented by Formula 2.

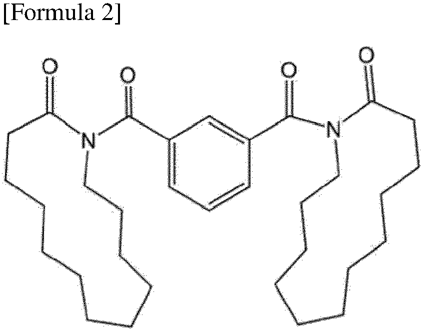

In some cases, the molecular weight controller according to the present invention may be ethylene-bis-stearamide (EBS), but the present invention is not limited thereto. The molecular weight controller may include at least one selected from the group consisting of an amine compound, a urea compound, and a di-urea compound.

According to the present invention, an amount of the molecular weight controller may be in a range of 0.01 parts by weight to 5 parts by weight based on 100 parts by weight of the entire lactam. The amount of the molecular weight controller may be in a range of preferably 0.01 parts by weight to 2 parts by weight, and more preferably 0.01 parts by weight to 1 part by weight.

In this case, when the molecular weight controller is added in an amount of less than 0.01 parts by weight, a gelation (crosslinking or branching reaction) problem may occur. When the amount of the molecular weight controller exceeds 5 parts by weight, a molecular weight reduction problem may occur. Therefore, the above range is preferable.

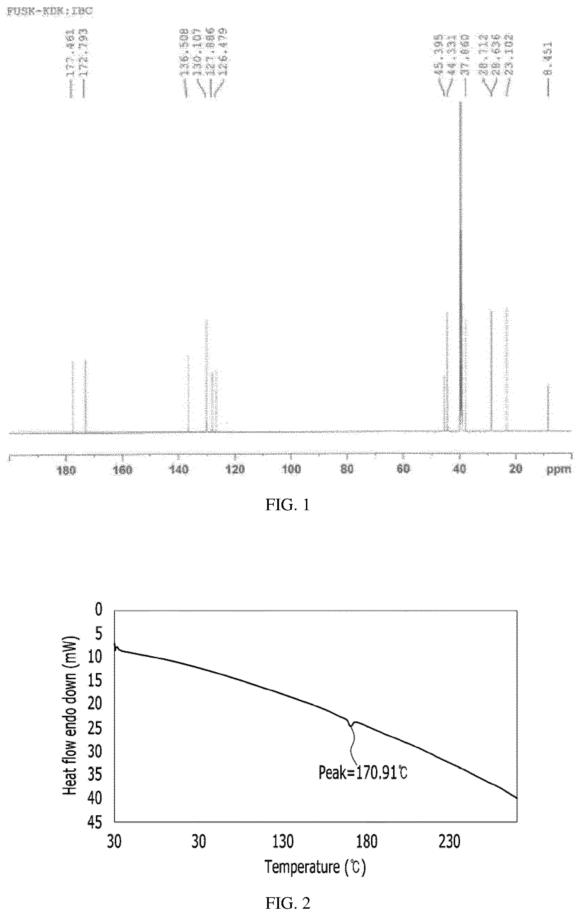

In this regard, as shown in FIG. 1, it was confirmed from the result of ¹³C-NMR and DSC analysis of the molecular weight controller prepared as above that, in the case of the above-described molecular weight controller, the melting temperature (Tm) was increased. From this, when the molecular weight controller is added, it can be expected that a fast reaction rate between polymerized chains in the polymerization process is controlled due to the long chain structure or the cyclic structure of the molecular weight controller itself, so that the molecular weight can be adjusted.

Finally, the activator is not particularly limited.

For example, the activator is selected from the group consisting of lactam that is N-substituted by electrophilic moiety, aliphatic diisocyanate, aromatic diisocyanate, polyisocyanate having more than two isocyanate groups, aliphatic diacylhalide, and aromatic diacyl halide. In addition, the activator (C) may include at least one selected from the group consisting of mixtures of the above-described materials.

Specifically, according to the present invention, the activator may preferably include carbon dioxide (CO₂), but the present invention is not limited thereto. For example, the activator may include at least one selected from the group consisting of benzoyl chloride, N-acetyl caprolactam, N-acetyl laurolactam, octadecyl isocyanate (SIC), toluene diisocyanate (TDI), hexamethylene diisocyanate (HDI), and any mixture thereof.

An amount of the carbon dioxide may be in a range of 0.002 parts by weight to 1.0 part by weight based on 100 parts by weight of the entire lactam. The amount of the carbon dioxide may be in a range of preferably 0.005 parts by weight to 0.5 parts by weight, and more preferably 0.01 parts by weight to 0.1 parts by weight.

In this case, when the carbon dioxide is added in an amount of less than 0.002 parts by weight, unpolymerization may occur or a reaction rate may decrease. When the amount of the carbon dioxide exceeds 1.0 part by weight, a gelation or depolymerization problem may occur. Therefore, the above range is preferable.

Hereinafter, preferred examples are presented so as to help the understanding of the present invention. However, the following examples are for illustrative purposes only and the present invention is not limited by the following examples.

### [Preparation Example]

### Preparation of molecular weight controller (isophthaloyl-bis-laurolactam (IBL))

A stirrer, a reflux condenser tube, and a dropping funnel were installed in a 3-neck flask. At this time, all glass wares were previously dried in a nitrogen atmosphere, considering moisture-sensitive reactants. 1 mol eq. (197.32 g) of laurolactam as a monomer, 1 mol of triethylamine, and 500 ml of THF were added to the flask and then stirred. Triethylamine acts as a scavenger that removes hydrochloric acid produced when laurolactam and isophthaloyl chloride react with each other. The prepared mixture was stirred and cooled with ice, and a solution in which 0.5 mol eq. of isophthaloyl chloride was dissolved in 150 ml of THF was slowly added dropwise for 40 minutes. After the addition was completed, the reaction mixture was stirred at room temperature for 30 minutes and then filtered. A white solid product was dried in air and then stirred in 200 ml of water to remove a reaction by-product Et₃NH⁺Cl⁻. The resultant product was washed twice with 100 ml distilled water on a filter paper. A white powder was dried in a vacuum oven at 80°C and a material was identified by using DSC and ¹³C-NMR.

### [Examples]

### <Example 1>

### Preparation of polyamide using molecular weight controller (IBL) having double active group

Caprolactam and laurolactam as a monomer and NaH as an initiator were weighed to a molar ratio of 50:50:1 and added to a 3-neck flask. A temperature of an oil bath was set to 160°C, and the monomer and the initiator were primarily dissolved in a nitrogen atmosphere. After confirming that the reactants were all melted, a vacuum was applied to remove hydrogen gas generated in the reactions. After the temperature was set to 230°C at which the polymerization reaction actually occurred, 0.05 mol of the molecular weight controller and 0.15 mol of the activator (TDI) based on 100 mol of the lactam were added. When the polymerization was completed, a 1:1 mixed solution of formic acid and water was added to terminate the reaction. The resultant product was washed several times with water and alcohol and finally dried in a vacuum oven. A sample having content shown in Table 1 was collected. A relative viscosity of each sample was confirmed and the result thereof is shown in Table 2. At this time, a 2 wt% solution was prepared by adding a polymer to 1,1,1,3,3,3-hexafluoro-2-propanol (HFIP) and the relative viscosity was measured at 25°C.

**[Table 1]**

| | Caprolactam | Laurolactam | Alkali metal | Activator | Molecular weight controller | End-capping agent |
|---|---|---|---|---|---|---|
| Example 1 | 50 | 50 | 1 | 0.15 (TDI) | 0.05 (IBL) | - |
| Example 2 | 50 | 50 | 1 | 0.15 (TDI) | 0.05 (IBL) | 0.2 |
| Example 3 | 50 | 50 | 1 | 0.15 (CO₂) | 0.05 (IBL) | - |
| Comparative Example 1 | 50 | 50 | 1 | 0.15 (TDI) | 0.05 (IBC) | - |
| Comparative Example 2 | 50 | 50 | 1 | 0.15 (TDI) | - | - |

### <Example 2>

A polyamide was prepared in the same manner as in Example 1, except that an end-capping agent having a molar ratio of 0.2 was added.

### <Example 3>

### A polyamide was prepared in the same manner as in Example 1, except that CO₂ instead of TDI was added as an activator.

### [Comparative Examples]

### <Comparative Example 1>

A molecular weight controller was prepared by using isophthaloyl-bis-caprolactam instead of isophthaloyl-bis-laurolactam, toluene instead of THF, and caprolactam instead of laurolactam. A polyamide was prepared in the same manner as in Example 1 by using the molecular weight controller.

### <Comparative Example 2>

A polymerization sample was prepared in the same manner as in Example 1, except that isophthaloyl-bis-laurolactam was not added.

**[Table 2]**

| Sequence | Viscosity (cps) |
|---|---|
| Example 1 | 19 |
| Example 2 | 17 |
| Example 3 | 18 |
| Comparative Example 1 | Gelation |
| Comparative Example 2 | Gelation |

As shown in Table 2, Comparative Examples 1 and 2 showed gelation because the molecular weight was not adjusted, as compared with Examples 1 to 3.

## Claims

1. A method for preparing a polyamide which includes a molecular weight controller having a double active group by an anionic polymerization reaction, wherein lactam, and based on 100 parts by weight of the entire lactam, 0.01 parts by weight to 20 parts by weight of an alkali metal as an initiator, 0.01 parts by weight to 5.0 parts by weight of a compound represented by Formula 2 as a molecular weight controller having a double active group, and a compound represented by Formula 1 using 0.01 parts by weight to 5.0 parts by weight of an activator are included: 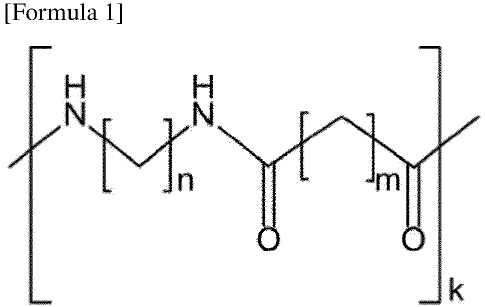 wherein n and m are each independently a rational number satisfying n=m or n>m, and k is a rational number satisfying a condition that a weight average molecular weight (Mw) of the compound represented by Formula 1 is in a range of 20,000 g/mol to 100,000 g/mol,

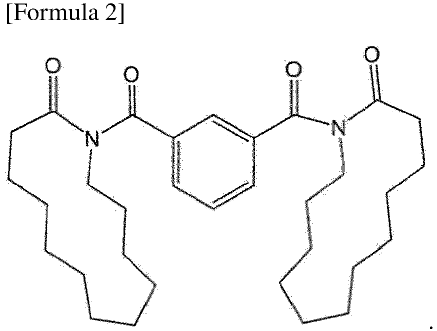

2. The method of claim 1, wherein the lactam comprises at least one selected from the group consisting of caprolactam, laurolactam, pyrrolidone, piperidinone, and any mixture thereof.

3. The method of claim 2, wherein two materials selected as the lactam are included at a weight ratio of 20 to 80:80 to 20.

4. The method of claim 1, wherein the activator comprises at least one selected from the group consisting of carbon dioxide (CO₂), benzoyl chloride, N-acetyl caprolactam, N-acetyl laurolactam, octadecyl isocyanate (SIC), toluene diisocyanate (TDI), hexamethylene diisocyanate (HDI), and any mixture thereof.

5. The method of claim 1, wherein the alkali metal comprises at least one selected from the group consisting of metal hydride, metal hydroxide, and metal alkoxide.

6. The method of claim 1, wherein the polymerization reaction is performed in a range of 160°C to 300°C.

7. A polyamide prepared by the method of any one of claims 1 to 6.

8. The polyamide of claim 7, wherein the polyamide has a polydispersity index (PDI) of 4 or less.

9. The polyamide of claim 7, wherein a weight average molecular weight (Mw) of the polyamide is in a range of 20,000 g/mol to 100,000 g/mol.

10. The polyamide of claim 7, wherein the polyamide has a linear, branched, hyperbranched, or dendritic structure.

11. A parts material selected from the group consisting of a vehicle material, an electronic device material, an industrial pipe material, a construction engineering material, a 3D printer material, a textile material, a cladding material, a machine tool material, a medical material, an aviation material, a photovoltaic material, a battery material, a sports material, a household appliance material, a household material, and a cosmetic material, which each include the polyamide of claim 7.

## Patentansprüche

1. Verfahren zur Herstellung eines Polyamids, das einen Molekulargewichtsregler mit einer doppelt aktiven Gruppe einschließt, durch eine anionische Polymerisationsreaktion, wobei Lactam und, bezogen auf 100 Gewichtsteile des gesamten Lactams, 0,01 Gewichtsteile bis 20 Gewichtsteile eines Alkalimetalls als Initiator, 0,01 Gewichtsteile bis 5,0 Gewichtsteile einer durch Formel 2 dargestellten Verbindung als Molekulargewichtsregler mit einer doppelt aktiven Gruppe und eine durch Formel 1 dargestellte Verbindung unter Verwendung von 0,01 Gewichtsteilen bis 5,0 Gewichtsteilen eines Aktivators eingeschlossen sind: 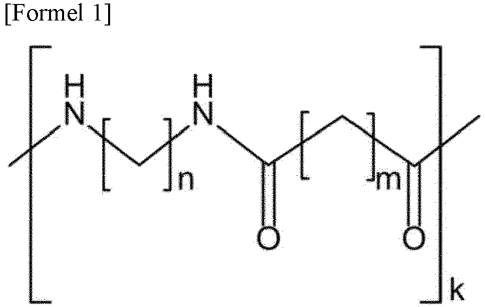 worin n und m jeweils unabhängig voneinander eine rationale Zahl sind, die n=m oder n>m erfüllt, und k eine rationale Zahl ist, die die Bedingung erfüllt, dass das gewichtsmittlere Molekulargewicht (Mw) der durch Formel 1 dargestellten Verbindung in einem Bereich von 20.000 g/mol bis 100.000 g/mol liegt,

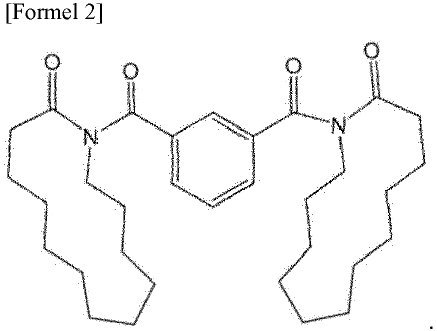

2. Verfahren nach Anspruch 1, wobei das Lactam mindestens eines aus der Gruppe bestehend aus Caprolactam, Laurolactam, Pyrrolidon, Piperidinon und einer beliebigen Mischung davon umfasst.

3. Verfahren nach Anspruch 2, wobei zwei als Lactam ausgewählte Materialien in einem Gewichtsverhältnis von 20 zu 80:80 zu 20 enthalten sind.

4. Verfahren nach Anspruch 1, wobei der Aktivator mindestens eines der folgenden Materialien umfasst: Kohlendioxid (CO2), Benzoylchlorid, N-Acetyl-Caprolactam, N-Acetyl-Laurolactam, Octadecylisocyanat (SIC), Toluoldiisocyanat (TDI), Hexamethylendiisocyanat (HDI) und ein beliebiges Gemisch davon.

5. Verfahren nach Anspruch 1, wobei das Alkalimetall mindestens eines aus der Gruppe bestehend aus Metallhydrid, Metallhydroxid und Metallalkoxid umfasst.

6. Verfahren nach Anspruch 1, wobei die Polymerisationsreaktion in einem Bereich von 160°C bis 300°C durchgeführt wird.

7. Polyamid, hergestellt nach dem Verfahren gemäß einem der Ansprüche 1 bis 6.

8. Polyamid nach Anspruch 7, wobei das Polyamid einen Polydispersitätsindex (PDI) von 4 oder weniger aufweist.

9. Polyamid nach Anspruch 7, wobei das gewichtsmittlere Molekulargewicht (Mw) des Polyamids in einem Bereich von 20.000 g/mol bis 100.000 g/mol liegt.

10. Polyamid nach Anspruch 7, wobei das Polyamid eine lineare, verzweigte, hyperverzweigte oder dendritische Struktur aufweist.

11. Teilematerial, ausgewählt aus der Gruppe bestehend aus einem Fahrzeugmaterial, einem Material für elektronische Geräte, einem Material für Industrierohre, einem Material für die Bautechnik, einem Material für 3D-Drucker, einem Textilmaterial, einem Verkleidungsmaterial, einem Werkzeugmaschinenmaterial, einem medizinischen Material, einem Material für die Luftfahrt, einem Material für die Photovoltaik, einem Batteriematerial, einem Sportmaterial, einem Material für Haushaltsgeräte, einem Material für den Haushalt und einem kosmetischen Material, die jeweils das Polyamid nach Anspruch 7 enthalten.

## Revendications

1. Procédé destiné à préparer un polyamide, lequel inclut un contrôleur de poids moléculaire présentant un double groupe actif par une réaction de polymérisation par anions, dans lequel sont inclus du lactame, et sur base de 100 parties en poids du lactame entier, de 0,01 partie en poids à 20 parties en poids d'un métal alcalin comme initiateur, de 0,01 partie en poids à 5,0 parties en poids d'un composé représenté par la Formule 2 comme contrôleur de poids moléculaire présentant un double groupe actif, et un composé représenté par la Formule 1 utilisant de 0,01 partie en poids à 5,0 parties en poids d'un activateur : 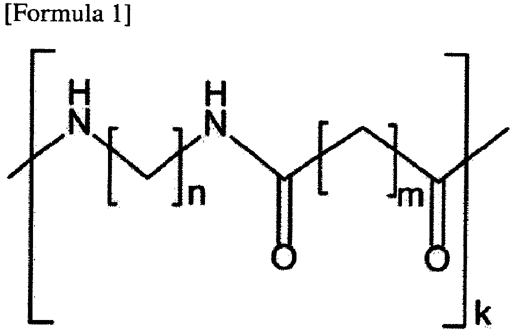 dans lequel n et m sont chacun indépendamment un nombre rationnel satisfaisant n = m ou n > m, et k est un nombre rationnel satisfaisant une condition suivant laquelle un poids moléculaire moyen en poids (Mw) du composé représenté par la Formule 1 est compris dans une plage allant de 20 000 g/mol à 100 000 g/mol,

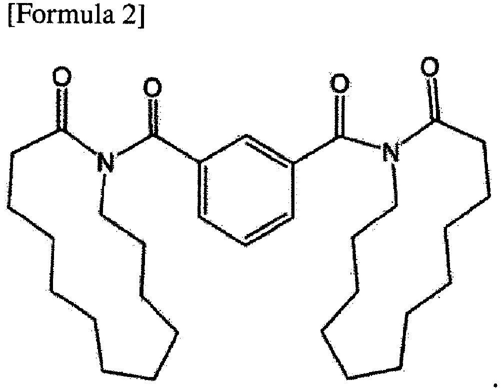

2. Procédé selon la revendication 1, dans lequel le lactame comprend au moins un élément sélectionné parmi le groupe consistant en du caprolactame, du laurolactame, de la pyrrolidone, de la pipéridinone, et un mélange quelconque de ceux-ci.

3. Procédé selon la revendication 2, dans lequel deux matières sélectionnées pour le lactame sont incluses suivant un rapport en poids de 20 à 80 : 80 à 20.

4. Procédé selon la revendication 1, dans lequel l'activateur comprend au moins un élément sélectionné parmi le groupe consistant en du dioxyde de carbone (CO₂), du chlorure de benzoyle, du N-acétyl-caprolactame, du N-acétyl-laurolactame, de l'octadécyl-isocyanate (SIC), un diisocyanate de toluène (TDI), du diisocyanate d'hexaméthylène (HDI), et un mélange quelconque de ceux-ci.

5. Procédé selon la revendication 1, dans lequel le métal alcalin comprend au moins un élément sélectionné parmi le groupe consistant en un hydrure métallique, un hydroxyde métallique, et un alkoxyde métallique.

6. Procédé selon la revendication 1, dans lequel la réaction de polymérisation est réalisée dans une plage allant de 160 °C à 300 °C.

7. Polyamide préparé par le procédé selon l'une quelconque des revendications 1 à 6.

8. Polyamide selon la revendication 7, dans lequel le polyamide présente un indice de polydispersité (PDI, Polydispersity Index) inférieur ou égal à 4.

9. Polyamide selon la revendication 7, dans lequel le poids moléculaire moyen en poids (Mw) du polyamide est compris dans une plage allant de 20 000 g/mol à 100 000 g/mol.

10. Procédé selon la revendication 1, dans lequel le polyamide présente une structure linéaire, ramifiée, hyper-ramifiée, ou dendritique.

11. Matière de pièces sélectionnée parmi le groupe consistant en une matière pour véhicule, une matière pour dispositif électronique, une matière pour conduite industrielle, une matière pour le génie du bâtiment, une matière pour imprimante 3D, une matière textile, une matière de revêtement, une matière pour machine-outil, une matière à usage médical, une matière pour l'aviation, une matière pour le photovoltaïque, une matière pour les batteries, une matière à usage sportif, une matière pour l'électroménager, une matière à usage domestique, et une matière à usage cosmétique, chacune incluant le polyamide selon la revendication 7.
